# EUROPÄISCHE PATENTANMELDUNG

(11) **EP 1 486 813 A1**
(43) Veröffentlichungstag der Anmeldung: **15.12.2004**
(21) Anmeldenummer: 04102515.6
(22) Anmeldetag: 04.06.2004
(51) Int. Cl.: G02B 21/18, G02B 21/22

(54) **Stereomikroskop mit einem Mitbeobachtertubus**

(30) Priorität: 13.06.2003 US 478394 P
(71) Anmelder: Leica Microsystems (Schweiz) AG, 9445 Heerbrugg (CH)
(72) Erfinder: Sander, Ulrich, Dr., 9445, Rebstein (CH); Sturgis, Max, UT 84060, Park City (US)
(74) Vertreter: Reichert, Werner F., Dr.

(57) **Zusammenfassung**

Die Erfindung betrifft ein Stereooperationsmikroskop mit einem monoskopischen oder bedingt stereoskopischen Mitbeobachtertubus (Assistententubus), der an der Rückseite des Mikroskops in einer Parallelebene zu den Stereo-Hauptstrahlengängen schwenkbar angeordnet ist.

## Beschreibung

Die Erfindung betrifft ein Stereomikroskop mit einem monoskopischen oder bedingt stereoskopischen Mitbeobachtertubus (Assistententubus). Stereomikroskope mit solchen Tuben sind hinlänglich bekannt und insbesondere bei ophthalmologischen und neurochirurgischen Operationen mittlerweile unerlässlich.

Es ist jedoch - je nach den Wünschen des Operateurs oder je nach räumlichen Bedürfnissen oder je nach Operationsort am Patienten - erwünscht, den Assistenten wahlweise auf der linken oder rechten Seite des Mikroskops stehen zu haben. Stand der Technik hinsichtlich geeigneter monoskopischer oder bedingt stereoskopischer Assistententuben ist, dass entweder aus dem linken oder rechten Hauptstrahlengang des Stereomikroskops mittels eines optischen Strahlenteilers ein Assistenten-Strahlengang seitlich ausgeblendet wird. Dem Wunsch, den Assistenten wahlweise links oder rechts zu platzieren, kann mit den bestehenden Lösungen nur unter bestimmten einschränkenden Voraussetzungen entsprochen werden.

Falls das Stereomikroskop dafür vorgesehen ist, nur auf einer Seite einen Assistenten-Strahlengang aus einem Hauptstrahlengang auszublenden, so müsste ein entsprechendes Stereomikroskop mit linkem oder rechtem Assistententubus ausgewählt werden. Letztere Auswahlmöglichkeit zwischen zwei verschiedenen Stereomikroskopen ist meistens jedoch nicht gegeben, somit könnte in diesem Fall dem Wunsch gar nicht oder eben nur mit einer teuren Zweitlösung entsprochen werden.

Falls das Stereomikroskop sowohl aus dem linken, als auch aus dem rechten Hauptstrahlengang einen Assistenten-Strahlengang ausblenden kann, jedoch nur mit einem Assistententubus ausgestattet ist, so müsste der Assistententubus von der einen auf die andere Seite ummontiert werden, vgl. z.B. den Leica-Prospekt: "The Leica MS1 - Surgical Microscope System", Dokumenten-Nr.: English 10 M1 500 Oen/A, 11.2002, February 2002. Nachteilig sind hierbei nicht nur die Montage selbst, sondern auch eventuelle Sterilitätsprobleme.

Falls das Stereomikroskop auf beiden Seiten mit einem Assistententubus ausgestattet ist, so könnte dem Wunsch, den Assistenten wahlweise links oder rechts zu platzieren, natürlich optimal entsprochen werden. Eine Ausstattung eines Stereomikroskops mit zwei fixen Assistententuben statt einem schwenkbaren wäre jedoch aus Gewichts- und Kostengründen auch nicht vorteilhaft.

Es gibt Lösungen, welche dem Nachteil einer Demontage des Assistententubus auf der einen und anschließenden Montage auf der anderen Seite oder dem Nachteil einer Montage zweier Assistententuben auf beiden Seiten durch eine Schwenkbarkeit in einer Horizontalebene begegnen. Als Horizontalebene ist im vorliegenden Fall eine Ebene zu verstehen, die wenigstens etwa senkrecht auf den Stereo-Hauptstrahlengängen steht. Diese Lösungen liegen jedoch alle im Bereich aufwändiger, stereoskopischer Assistenten-Bildversorgung. Sie sind nur da möglich, wo das Stereomikroskop nicht nur mit zwei Stereo-Hauptstrahlengängen, sondern mit zwei zusätzlichen, hierzu parallel verlaufenden Assistenten-Hauptstrahlengängen, also mit einem vierstrahligen Mikroskopaufbau ausgestattet ist.

Nachteilig bleibt jedoch neben dem technischen Aufwand auch bei diesen Schwenk-Lösungen, dass der Chirurgentubus im Weg ist und der Assistententubus erst geschwenkt werden kann, nachdem der Chirurgentubus entfernt oder zumindest weggeklappt worden ist.

Weiterhin nachteilig ist, dass Daten, die in einen der beiden Stereo-Hauptstrahlengänge eingespiegelt sind, auch entsprechend in einen der beiden Assistenten-Strahlengänge eingespiegelt werden müssen.

Auch bei den mono- und bedingt stereoskopischen Lösungen bleibt es hinsichtlich der Dateneinspiegelung für den Assistenten nachteilig, dass sie nur in demjenigen Stereo-Hauptstrahlengang betrieben werden kann, aus dem auch der Assistenten-Strahlengang jeweils ausgeblendet wird. Wenn nun die Position des Assistenten von der einen auf die andere Seite gewechselt werden soll, so ist das bei diesen Lösungen immer auch mit einem Wechsel des Stereo-Hauptstrahlengangs verbunden. Um jedoch den Assistenten weiterhin mit den eingeblendeten Daten - für deren Beobachtung unter Umständen gerade der Assistent zuständig sein soll - zu versorgen, müsste der Chirurg demzufolge die Einspiegelung der Daten vom einen auf den anderen Stereo-Hauptstrahlengang mit wechseln. Dieser Umstand kann dem Chirurgen jedoch unliebsam sein, weil ihm die Wahl genommen wird, sein dominantes Auge mit den eingespiegelten Daten zu versorgen oder frei zu halten. Außerdem müsste das Operationsmikroskop dann mit einer Vorrichtung ausgestattet sein, die die Einspiegelung von einem auf den anderen Stereo-Hauptstrahlengang wechselt oder die Einspiegelungsvorrichtung müsste abgenommen werden, um auf der gewünschten Seite montiert zu werden.

Aufgabe der Erfindung war es somit, einen mono- oder bedingt stereoskopischen Mitbeobachtertubus zu schaffen, welcher wahlweise ohne zeitraubende und umständliche Montage oder zusätzliche Verstell-Maßnahmen an verschiedenen Orten - insbesondere an sich gegenüberliegenden Seiten - am Mikroskopkörper positioniert werden kann und die Nachteile bekannter ähnlicher Lösungen nicht kennt.

Die Lösung der gestellten Aufgabe konnte in der Umsetzung folgender erfindungsgemäßen Gedanken gefunden werden:

Der Erfinder erkannte, dass durch eine um nochmals 90 Grad (also 180 Grad vom Chirurgen weg) versetzte Anordnung der Ausblendung des Assistenten-Strahlengangs und eine schwenkbare Prismenanordnung um die Achse dieses Assistenten-Strahlengangs und eine gleichzeitige Drehbarkeit des Assistenten-Binokulartubus eine Schwenkbarkeit des gesamten Assistententubus von der rechten auf die linke Seite des Mikroskopkörpers erreicht werden kann.

Erste erfinderische Idee hierfür ist wie bereits erwähnt, dass die Ausblendung des Assistenten-Strahlengangs nicht seitlich aus jeweils einem Hauptstrahlengang heraus, sondern nach hinten, also zwar nach wie vor um 90 Grad aus der Achse des Hauptstrahlengangs abgezweigt, jedoch hinsichtlich der Richtung nicht nur 90 Grad seitlich links oder rechts vom Chirurgen weg, sondern 180 Grad in entgegengesetzter Richtung des Chirurgen vorgenommen wird.

Zweiter erfinderischer Gedanke ist, dass ein Assistententubus in einer Parallelebene zu den Stereo-Hauptstrahlengängen drehbar an einer Trennstelle angeordnet ist. Durch diese Anordnung des Tubus entsteht eine Schwenkbarkeit zu seitlichen Positionen, die der Assistent wahlweise einnehmen kann. Ein hierzu ergänzender erfinderischer Gedanke sieht vor, dass beim Ausschwenken des Assistententubus z.B. zur linken Seite hin automatisch ein Ausgleichsgewicht zur rechten Seite hin schwenkt. Letzteres verhindert, dass der sich im Gleichgewicht befindliche Mikroskopkörper in ein Ungleichgewicht gerät, wenn der Assistententubus auf eine Seite geschwenkt wird.

Weiterer Gedanke ist eine Drehbarkeit des Assistenten-Binokulartubus, damit er nach dem Schwenken des Tubus von der einen auf die andere Seite in eine wahlweise aufrechte Stellung gedreht werden kann.

In einer bevorzugten Ausgestaltung ist ein schwenkbarer optischer Strahlenteiler vorgesehen, der den Assistenten-Strahlengang sowohl wie bisher seitlich (Stand der Technik), als auch in die neue Richtung nach hinten (vorliegende Erfindung) vornimmt. Wenn beide Hauptstrahlengänge des Stereomikroskops mit einem solchen schwenkbaren optischen Strahlenteiler versehen sind, so ergibt sich daraus aufgrund von vier (zwei gemäß Stand-der-Technik-Anordnung und zwei gemäß neuer Anordnung) verschiedenen Anbringungsorten (Trennstellen) für einen Assistententubus - ohne die eigene Schwenkbarkeit des Assistententubus selbst mit ein zu rechnen - eine höhere Variabilität.

In einer weiterhin bevorzugten Ausgestaltung wird der Assistenten-Strahlengang mittels zweier Umlenkelemente einer Trennstelle zugeordnet, die in der Mitte des Mikroskopkörpers liegt. Die Mitte des Mikroskopkörpers entspricht der Mitte zwischen den Stereo-Hauptstrahlengängen. Diese Anordnung hat den Vorteil, dass der Assistententubus gleich weit entfernte (symmetrische) Seitenpositionen erreicht.

Um eine Auswahl des Stereo-Hauptstrahlengangs zu gewährleisten, der den Assistententubus mit einem Bild versorgt, ist es weiterhin vorgesehen, dasjenige Umlenkelement schaltbar auszugestalten, das den Assistenten-Strahlengang der vorhin beschriebenen mittigen Trennstelle zuordnet. Dieses Umlenkelement liefert dem mittig angeordneten Assistententubus somit in der einen Schaltposition das Bild aus dem linken und in der anderen Schaltposition das Bild aus dem rechten Stereo-Hauptstrahlengang. Auf diese Art und Weise kann der Assistent - unabhängig von der Tatsache, in welchem Stereo-Hauptstrahlengang (linkes oder rechtes dominantes Führungsauge) der Chirurg die Dateneinspiegelung bevorzugt - mit dem rechten oder linken Stereo-Hauptstrahlengang versorgt werden. Das bedeutet, dass vorteilhafterweise bei dieser Lösung die Dateneinspiegelung dem Assistenten immer zur Verfügung steht.

Des Weiteren ist eine Ausgestaltung vorgesehen, bei der der Assistententubus auf einer rückseitig am Mikroskopkörper angeordneten Gleitschiene wahlweise auf die folgenden drei denkbaren "Andockstellen" (Trennstellen) geschoben werden kann:

Eine der beiden Trennstellen, welche der neuartigen, um 90 Grad versetzten Ausblendung des Assistenten-Strahlengangs entsprechen. Sie liegen neu auf der Rückseite des Mikroskopkörpers, sind jedoch nicht mittig angeordnet und ergeben somit keine gleich weit entfernten Schwenkpositionen des Assistententubus.

Die mittig auf der Rückseite des Mikroskopkörpers angeordnete Trennstelle, die symmetrische Schwenkpositionen des Assistententubus bietet.

Eine weitere Ausführung einer halbkreisförmigen Gleitschiene bindet auch die beiden seitlichen Trennstellen gemäß Stand der Technik mit ein. Weitere Ausbildungen der Erfindung sind in den Figuren sowie deren Beschreibung und in den abhängigen Patentansprüchen angegeben.

Anhand von Figuren wird die Erfindung symbolisch und beispielhaft näher erläutert.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1 -: einen schematischen Aufbau eines Stereomikroskops gemäß dem Stand der Technik mit einem Assistententubus, der auf die eine oder andere Seite montiert werden kann,
- Fig. 2 -: einen erfindungsgemäßen, schematischen Aufbau eines Stereomikroskops mit einem Assistententubus, der neu in einer rückseitigen Parallelebene zu den Stereo-Hauptstrahlengängen schwenkbar ist,
- Fig. 3 -: in einer Schnittdarstellung senkrecht zu den Stereo-Hauptstrahlengängen das Gehäuse des optischen Strahlenteilers mit seitlicher Ausblendung des Assistenten-Strahlengangs gemäß dem Stand der Technik,
- Fig. 4 -: eine erfindungsgemäße, zum Herkömmlichen um 90 Grad versetzte Ausblendung des Assistenten-Strahlengangs mit erfindungsgemäßem schwenkbaren Assistententubus in einer schematischen Draufsicht,
- Fig. 5 -: eine erfindungsgemäße Umlenkung des Assistenten-Strahlengangs in eine mittig am Gehäuse für die optischen Strahlenteiler liegende Position,
- Fig. 6 -: eine Umlenkung beider Stereo-Hauptstrahlengänge zu der mittigen Trennstelle und einem schaltbaren Umlenkelement dazwischen und
- Fig. 7 -: eine multifunktionale Anordnung, bei der der Assistententubus wahlweise an den seitlichen Trennstellen gemäß dem Stand der Technik oder erfindungsgemäß zwischen den neuen Trennstellen verschiebbar angeordnet ist.

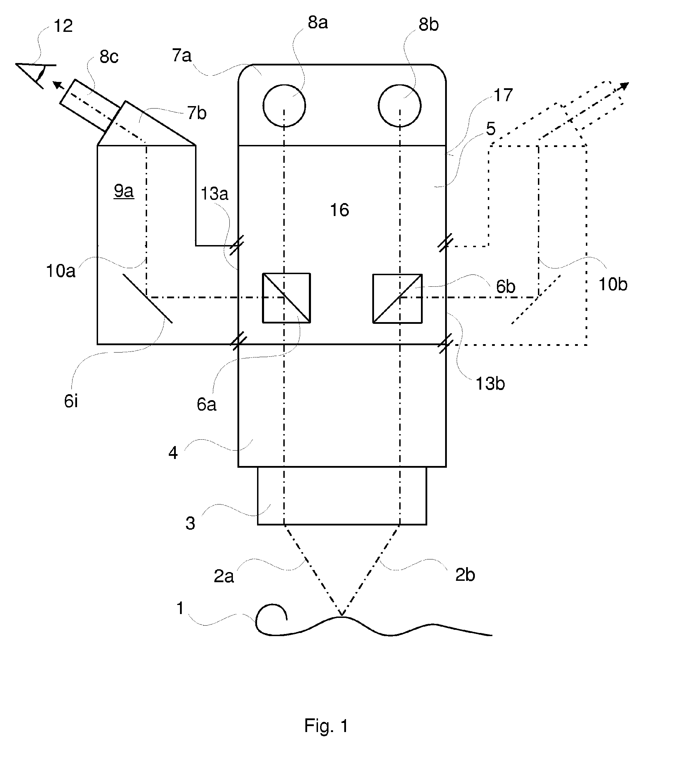

Fig. 1 zeigt in einer Frontansicht schematisch den Aufbau eines Stereomikroskops nach dem Stand der Technik. Das Stereomikroskop weist zwei Stereo-Hauptstrahlengänge 2a und 2b, ein Hauptobjektiv 3, das über dem Objekt bzw. Patient 1 gehalten ist, einen Mikroskopkörper 4 und einen Binokulartubus 7a mit Okularen 8a und 8b auf. Das Gehäuse 5 ist dem Betrachter mit seiner Vorderseite 16 zugewandt, die Seite 17 ist die gegenüberliegende Rückseite. Im Gehäuse 5 sind zwei optische Strahlenteiler 6a und 6b angeordnet, die aus dem jeweiligen Stereo-Hauptstrahlengang 2a bzw. 2b seitwärts aus dem Gehäuse 5 hinaus einen Assistenten-Strahlengang 10a bzw. 10b ausblenden. Der Assistenten-Strahlengang 10a wird mittels des Umlenkelements 6i innerhalb des Assistententubus 9a auf den Binokulartubus 7b umgelenkt und von da in die Okulare eingespiegelt, von denen in dieser Seitenansicht (des Assistententubus) nur das Okular 8c sichtbar ist. Der beobachtende Assistent ist symbolisch durch das Auge 12 dargestellt. Wenn nun statt der linken Position (durchgezogene Kontur) für den Assistententubus 9a die rechte Position (gestrichelte Kontur) erwünscht ist, so muss der Assistententubus 9a von der Trennstelle 13a auf die Trennstelle 13b ummontiert werden.

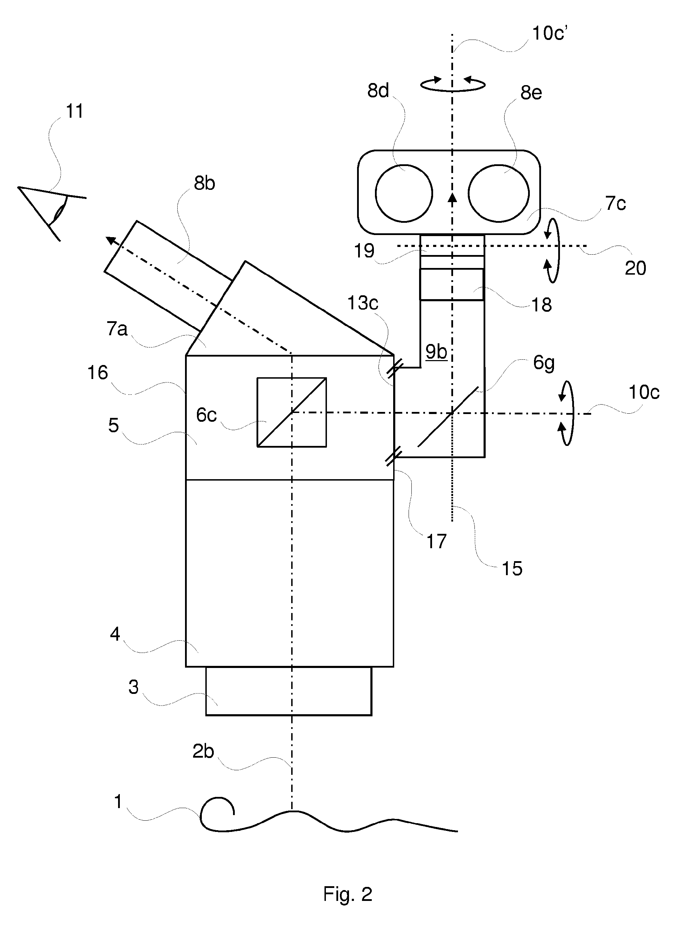

In Fig. 2 ist ein erfindungsgemäßes Stereomikroskop in der Seitenansicht von rechts gesehen dargestellt. Das Gehäuse 5 verfügt über eine Vorderseite 16 und eine Rückseite 17. In dieser Seitenansicht ist nur der rechte Stereo-Hauptstrahlengang 2b für das rechte Auge 11 des Chirurgen dargestellt. Der optische Strahlenteiler 6c ist so angeordnet, dass der Assistenten-Strahlengang (dargestellt durch seine Achse 10c) nicht mehr zur Seite, sondern durch eine Trennstelle 13c in der Rückseite 17 des Gehäuses 5 ausgeblendet wird. Ein Assistententubus 9b ist an der Trennstelle 13c in einer Parallelebene 15 zu den Stereo-Hauptstrahlengängen 2a und 2b um die Achse 10c schwenkbar befestigt. Ein in den Assistententubus integriertes Umlenkelement 6g führt den Assistenten-Strahlengang (dargestellt durch seine Achse 10c vor der Umlenkung und 10c' nach der Umlenkung) durch ein Bildaufrichte-Prisma 18 hindurch in einen Binokulartubus 7c mit den Okularen 8d und 8e. Der Binokulartubus 7c ist auf einem Gelenk 19 so angeordnet, dass er um die Achse 20 schwenkbar und aber auch um die Achse 10c' drehbar ist.

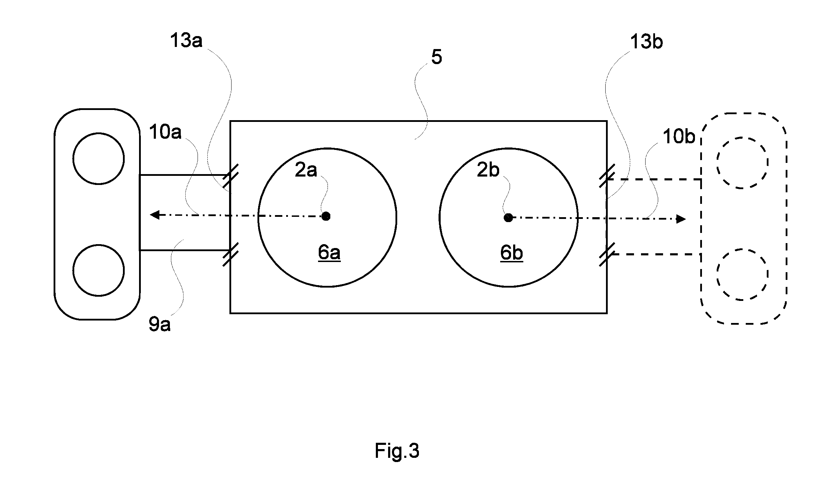

Fig. 3 zeigt in einer schematischen Draufsicht, wie die optischen Strahlenteiler 6a und 6b bei aus dem Stand der Technik bekannten Vorrichtungen die Stereo-Hauptstrahlengänge 2a bzw. 2b zu den Seiten des Gehäuses 5 ausblenden, durch entsprechende Trennstellen 13a bzw. 13b entweder zu der linken Position (volle Kontur) oder der rechten (gestrichelte Kontur) des herkömmlichen Assistententubus 9a.

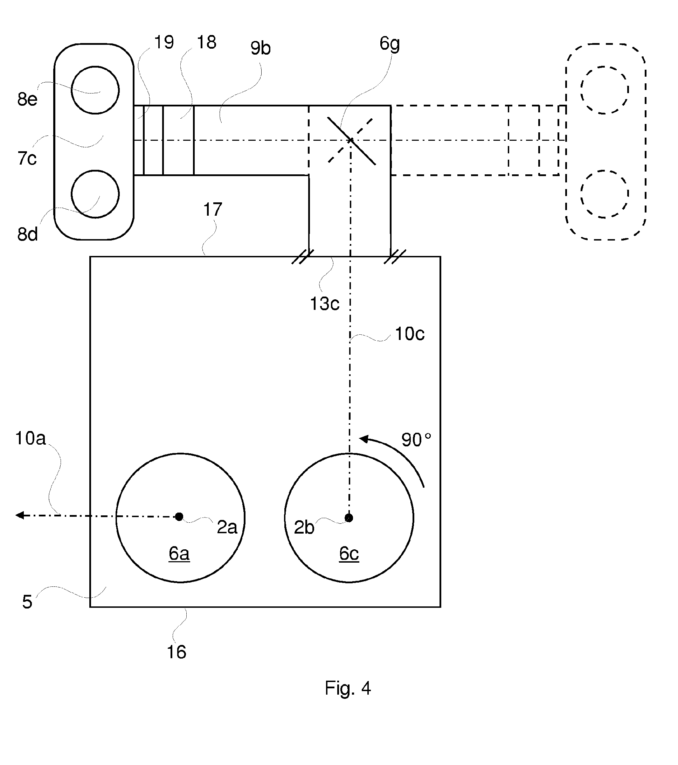

In Fig. 4 hingegen ist schematisch dargestellt, dass durch eine Schwenkbarkeit des optischen Strahlenteilers 6c um 90 Grad eine neue Ausblendung eines Assistenten-Strahlengangs 10c aus dem Stereo-Hauptstrahlengang 2b erreicht werden kann. Der Assistenten-Strahlengang 10c wird einer auf der Rückseite 17 befindlichen Trennstelle 13c des Gehäuses 5 zugeführt. Die Ausblendung des Assistentenstrahlengangs 10a aus dem Stereo-Hauptstrahlengang 2a ist unverändert zum Stand der Technik dargestellt. Dadurch, dass der Assistententubus 9b an der Trennstelle 13c schwenkbar befestigt ist, kann für den Assistenten eine linke (volle Kontur) oder eine rechte (gestrichelte Kontur) Seitenposition des Assistenten bezogen werden. Die gestrichelte Kontur soll gemäß einem weiteren erfinderischen Aspekt jedoch auch schematisch ein ausschwenkbares Gegengewicht darstellen, welches automatisch einem Ungleichgewicht am Mikroskopkörper entgegenwirkt, das durch das Schwenken des Assistententubus von der einen auf die andere Seite entsteht.

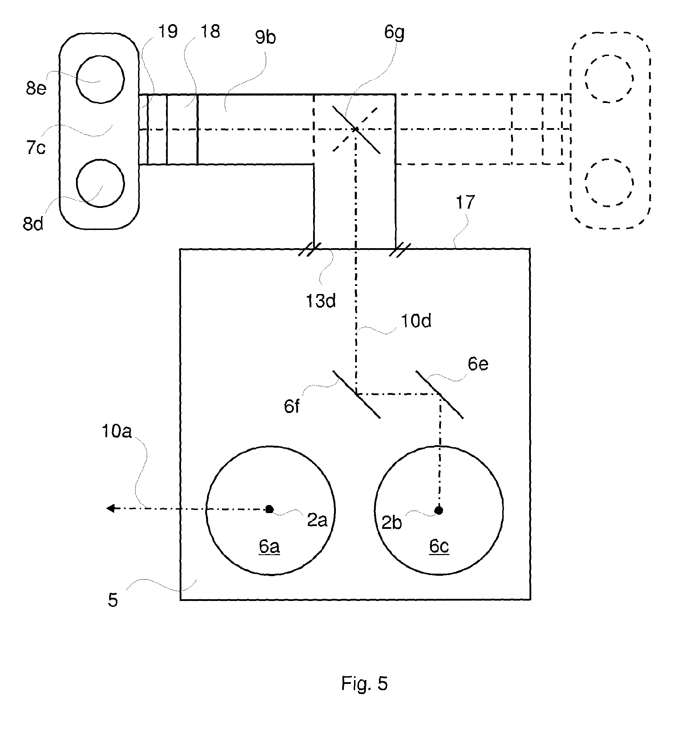

Fig. 5 zeigt schematisch eine Anordnung, die zum Ziel hat, durch eine mittig auf der Rückseite 17 des Gehäuses 5 angeordneten Trennstelle 13d beim Schwenken des Assistententubus 9b eine linke und eine rechte Seitenposition für den Assistenten zu erreichen, die gleich weit vom Gehäuse 5 bzw. vom Mikroskopkörper entfernt ist. Dieses wird durch ein Paar von Umlenkelementen 6e und 6f erzielt. Durch diesen Aufbau ist eine absolute Symmetrie in Bezug auf den Haupt-Binokulartubus gegeben.

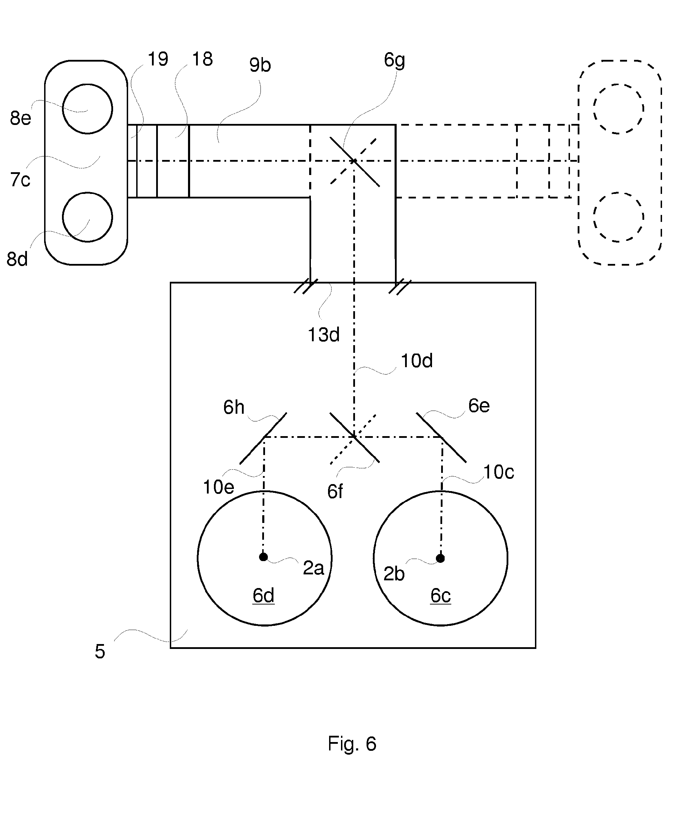

In Fig. 6 ist schematisch eine Anordnung dargestellt, bei der aus beiden Stereo-Hauptstrahlengängen 2a und 2b durch schwenkbare optische Strahlenteiler 6c und 6d und Umlenkelementen 6e und 6f, bzw. 6h und 6f die Assistenten-Strahlengänge 10e und 10c der mittigen Trennstelle 13d zugeführt werden. Dem Assistenten steht der Assistenten-Strahlengang 10d zur Verfügung, der wahlweise aus dem Stereo-Hauptstrahlengang 2a oder 2b stammt, weil das Umlenkelement 6f schaltbar ausgestaltet ist. Mit diesem Aufbau hat der Assistent die Möglichkeit, den einen 2a oder anderen 2b Stereo-Hauptstrahlengang auszuwählen und somit auch optimal die jeweiligen Inhalte dieser Strahlengänge einzusehen (z.B. mit oder ohne eingespiegelten Daten).

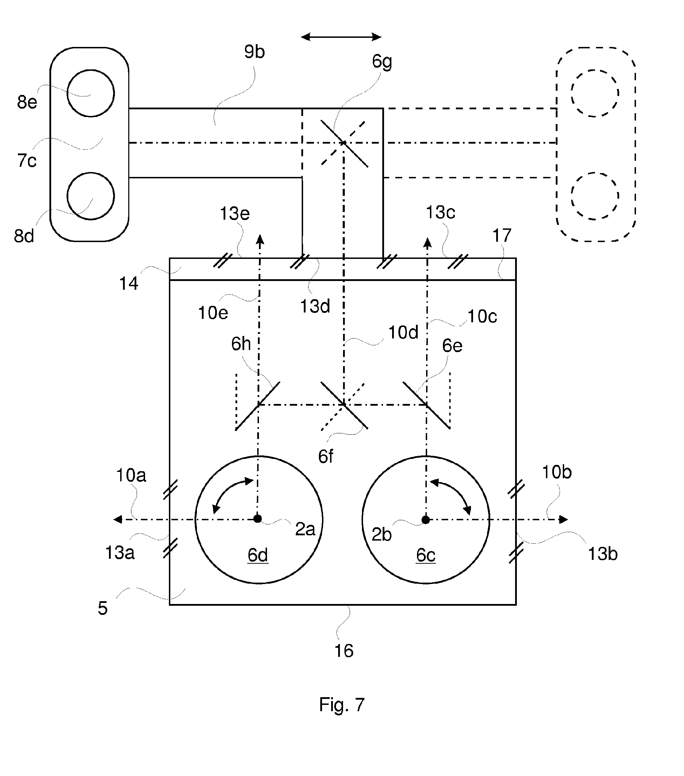

Fig. 7 zeigt sowohl denkbare Trennstellen 13c, 13d, 13e, die sich erfindungs-gemäß neu auf der Rückseite 17 des Gehäuses 5 befinden, als auch diejenigen Trennstellen 13a, 13b, die gemäß dem Stand der Technik den Assistenten-Strahlengang zur Seite ausblenden. Bei dieser Ausführung sind die optischen Strahlenteiler 6c und 6d um 90 Grad schaltbar und die Umlenkelemente 6e, 6f und 6h sind schaltbar und/oder ausschwenkbar ausgestaltet. Demzufolge kann wahlweise jede Trennstelle 13a-e mit einem Assistenten-Strahlengang 10a-e versorgt werden. Der Assistententubus 9b kann auf einer Gleitschiene 14 wahlweise zwischen den Trennstellen 13c-e hin und her geschoben werden. Eine nicht näher dargestellte Variante bindet mittels einer halbkreisförmigen Gleitschiene die seitlichen Trennstellen 13a und 13b mit ein. Bei dieser letztgenannten Variante müsste dann natürlich die Schwenkbarkeit der Umlenkelemente 6d und 6c entsprechend radial angepasst sein.

### Bezugszeichenliste

- 1 -: Objekt bzw. Patient
- 2a, b -: Achsen der Hauptstrahlengänge des Stereomikroskops
- 3 -: Hauptobjektiv
- 4 -: Mikroskopkörper
- 5 -: Gehäuse für optische Strahlenteiler
- 6a-d -: Optischer Strahlenteiler
- 6e-i -: Umlenkelement
- 7a-c -: Binokulartubus
- 8a-e -: Okular
- 9a, b -: Assistenten- bzw. Mitbeobachtertubus
- 10a-c, c', d, e -: Achsen der Assistenten-Strahlengänge
- 11 -: Chirurgenauge
- 12 -: Assistentenauge
- 13a-e -: Trennstelle
- 14 -: Gleitschiene
- 15 -: Parallelebene zu 2a, b
- 16 -: Vorderseite von 5
- 17 -: Rückseite von 5
- 18 -: Bildaufrichte-Prisma
- 19 -: Gelenk
- 20 -: Drehachse von 19

## Patentansprüche

1. Stereomikroskop mit einem Binokulartubus (7a) und zwei Stereo-Hauptstrahlengängen (2a, 2b) und mit mindestens einem optischen Strahlenteiler (6a, 6b) für mindestens einen Assistententubus (9a), **dadurch gekennzeichnet, dass** mindestens ein Assistenten-Strahlengang (10) zu einer Rückseite (17) eines Gehäuses (5) ausblendbar ist und dass ein Assistententubus (9b) um eine Achse des Assistenten-Strahlengangs (10c) in einer Parallelebene (15) zu den Stereo-Hauptstrahlengängen (2a, 2b) schwenkbar ist.

2. Stereomikroskop nach Anspruch 1, **dadurch gekennzeichnet, dass** in entgegengesetzte Schwenkrichtung des Assistententubus (9b) automatisch ein Ausgleichsgewicht schwenkbar ist.

3. Stereomikroskop nach Anspruch 1, **dadurch gekennzeichnet, dass** ein optischer Strahlenteiler (6c), der den Assistenten-Strahlengang (10c) erzeugt, um 90 Grad schwenkbar angeordnet ist.

4. Stereomikroskop nach einem der vorhergehenden Ansprüche, **dadurch gekennzeichnet, dass** der Assistententubus (9b) an einer Trennstelle (13c) abnehmbar angeordnet ist.

5. Stereomikroskop nach einem der vorhergehenden Ansprüche, **dadurch gekennzeichnet, dass** ein Binokulartubus (7c) am Assistententubus (9b) um ca. 180 Grad drehbar um eine Achse des Assistenten-Strahlengangs (10c') und um eine darauf senkrecht stehende Achse (20) eines Gelenks (19) schwenkbar angeordnet ist.

6. Stereomikroskop nach einem der vorhergehenden Ansprüche, **dadurch gekennzeichnet, dass** der Assistenten-Strahlengang (10d) mittels eines Paares von Umlenkelementen (6e, 6f) an einer mittig am Gehäuse (5) angeordneten Trennstelle (13d) anschließbar ist.

7. Stereomikroskop nach Anspruch 6, **dadurch gekennzeichnet, dass** sowohl der Assistenten-Strahlengang (10c) aus dem Stereo-Hauptstrahlengang (2b), als auch der Assistenten-Strahlengang (10e) aus dem Stereo-Hauptstrahlengang (2a) mittels Umlenkelementen (6e, 6f, 6h) der mittig am Gehäuse (5) angeordneten Trennstelle (13d) zuordenbar sind und dass das Umlenkelement (6f) wahlweise auf den Assistenten-Strahlengang (10c) oder den Assistenten-Strahlengang (10e) schaltbar ist.

8. Stereomikroskop nach Anspruch 7, **dadurch gekennzeichnet, dass** der Assistenten-Strahlengang (10b, 10c, 10d) des einen Stereo-Hauptstrahlengangs (2b) wahlweise einer seitlich am Gehäuse (5) angeordneten Trennstelle (13b) oder wahlweise der an der Rückseite (17) des Gehäuses (5) versetzt angeordneten Trennstelle (13c) oder wahlweise der an der Rückseite (17) des Gehäuses (5) mittig angeordneten Trennstelle (13d) zuordenbar zu zuordnen ist.

9. Stereomikroskop nach Anspruch 7, **dadurch gekennzeichnet, dass** ein Assistenten-Strahlengang (10a, 10e, 10d) des anderen Stereo-Hauptstrahlengangs (2a) wahlweise einer seitlich am Gehäuse (5) angeordneten Trennstelle (13a) oder wahlweise einer an der Rückseite (17) des Gehäuses (5) versetzt angeordneten Trennstelle (13e) oder wahlweise der an der Rückseite (17) des Gehäuses (5) mittig angeordneten Trennstelle (13d) zuordenbar ist.

10. Stereomikroskop nach einem der vorhergehenden Ansprüche, **dadurch gekennzeichnet, dass** beide optischen Strahlenteiler (6c, 6d) und das Umlenkelement (6f) um mindestens 90 Grad schwenkbar angeordnet sind und die Umlenkelemente (6e, 6h) um mindestens 45 Grad schwenkbar angeordnet sind.

11. Stereomikroskop nach einem der vorhergehenden Ansprüche, **dadurch gekennzeichnet, dass** der Assistententubus (9b) entlang einer Gleitschiene (14) zwischen den Trennstellen (13c) (13d) (13e) verschiebbar ist.

12. Stereomikroskop nach einem der vorhergehenden Ansprüche, **dadurch gekennzeichnet, dass** der Assistententubus (9b) entlang einer halbkreisförmigen Gleitschiene (14) zwischen den Trennstellen (13a), (13e), (13d), (13c), (13b) verschiebbar ist.
